Europäisches Patentamt

European Patent Office

Office européen des brevets

(11) Veröffentlichungsnummer: **0 022 197**
**B1**

# (12) EUROPÄISCHE PATENTSCHRIFT

(45) Veröffentlichungstag der Patentschrift:
12.01.83

(21) Anmeldenummer: 80103417.4

(22) Anmeldetag: 19.06.80

(51) Int. Cl.³: **C 01 B 17/22, C 02 F 1/58**

(54) Verfahren zur Recyclisierung von Schwefel.

(30) Priorität: 30.06.79 DE 2926528
02.06.80 DE 3020894

(43) Veröffentlichungstag der Anmeldung:
14.01.81 Patentblatt 81/2

(45) Bekanntmachung des Hinweises auf die Patenterteilung:
12.01.83 Patentblatt 83/2

(84) Benannte Vertragsstaaten:
DE FR GB IT

(56) Entgegenhaltungen:
AT-B-212 337
DE-A-1 667 763
DE-A-2 740 855
,,Chemiker-Zeitung/Chemische Apparatur/Verfahrenstechnik'', Bd. 93, Nr. 40, 1969, Heidelberg, K. HOLOUBEK et al., ,,Methoden zur Reinigung polysulfid- und thiosulfathaltiger Abwässer'', S. 390 bis 395.

(73) Patentinhaber: CASSELLA Aktiengesellschaft, Hanauer Landstrasse 526, D-6000 Frankfurt am Main 61 (DE)

(72) Erfinder: Daniek, Georg, Lauterbacher Strasse 27, D-6000 Frankfurt am Main 61 (DE)

(74) Vertreter: Urbach, Hans-Georg, Dr. et al, Hanauer Landstrasse 526, D-6000 Frankfurt am Main 61 (DE)

## Verfahren zur Recyclisierung von Schwefel

Die vorliegende Erfindung betrifft ein Verfahren zur Recyclisierung von Schwefel aus gefärbten, Alkalisulfide und/oder Alkalipolysulfide enthaltenden Abwasserlösungen, insbesondere aus stark gefärbten Filtraten der Schwefelfarbstoffherstellung.

Schwefelfarbstoffe werden in bekannter Weise erhalten durch Umsetzung geeigneter aromatischer Verbindungen mit Natriumsulfid, Natriumpolysulfid und/oder elementarem Schwefel entweder in Abwesenheit von Lösungsmitteln in der Schmelze (Backverfahren) oder in Gegenwart von organischen oder wässerig-organischen Lösungsmitteln (Kochverfahren). (Siehe z.B. Dr. O. Lange, „Die Schwefelfarbstoffe, ihre Herstellung und Verwendung", Verlag Otto Spanner, Leipzig 1912.)

Bei dieser Umsetzung treten wechselnde Mengen von Schwefel in die aktiven Positionen der aromatischen Ausgangsmaterialien ein, wobei intramolekular schwefelhaltige Ringe entstehen und intermolekular Schwefelbrücken, insbesondere Sulfid- und Disulfidbrücken, zu einer erheblichen Vergrösserung des Moleküls führen. Die so erhaltenen Schwefelfarbstoffe werden unter reduktiver Spaltung von Disulfidbrücken in alkalilösliche Form überführt und können in dieser Weise aus wässerigem Medium auf Baumwolle gefärbt werden.

Die Schwefelfarbstoffe haben in der Technik eine sehr grosse Bedeutung erlangt und werden demgemäss in grossem Umfang hergestellt. Ein gravierendes Problem der Schwefelfarbstoffabrikation ist die Aufarbeitung bzw. ökologisch einwandfreie Beseitigung der beim Abtrennen der hergestellten Schwefelfarbstoffe anfallenden, noch stark gefärbten Filtrate. Je nach Art des Schwefelungsverfahrens und der Aufarbeitung können diese Filtrate neben Restfarbstoff mehr oder weniger grosse Mengen Natriumsulfid, Natriumpolysulfid oder Natriumsulfat enthalten. Zur Aufarbeitung der anfallenden Filtrate sind drei verschiedene Wege beschritten worden.

So ist es bekannt, die Filtrate mit Luft auszublasen. Hierbei wird in die Filtrate 3 bis 6 h lang ein kräftiger Luftstrom eingeblasen. Der Sauerstoff der Luft oxydiert bei diesem Verfahren das Polysulfid und die in den Filtraten enthaltenden Restfarbstoffmengen, wobei sich elementarer Schwefel zusammen mit den Resten des hergestellten Schwefelfarbstoffs ausscheidet. Der so erhaltene Schwefelschlamm ist durch Farbstoff verunreinigt und für eine Wiederverwendung zur Herstellung von Schwefelfarbstoffen ungeeignet. Die von dem ausgefallenen Schwefelschlamm abgetrennten Filtrate enthalten eine der ursprünglichen Polysulfidmenge äquivalente Menge an Natriumthiosulfat. Eine weitere Möglichkeit besteht in der Behandlung der Polysulfidfiltrate mit schwefliger Säure. Auch hierbei wird ausschliesslich ein durch Farbstoffreste stark verunreinigter Schwefel erhalten, der für die Herstellung von Schwefelfarbstoffen nicht mehr eingesetzt werden kann. Die Umsetzung mit schwefliger Säure kann dahingehend modifiziert werden, dass die Polysulfidfiltrate mit sauren Thiosulfatlösungen zur Reaktion gebracht werden. Zweckmässigerweise werden hierbei direkt solche thiosulfathaltigen Lösungen verwendet, die bei der Farbstoffisolierung aus polysulfidhaltigen Schwefelfarbstoffsuspensionen durch das Ausblasen mit Luft erhalten werden. Bei allen diesen bekannten Verfahren zur Aufarbeitung von Natriumsulfid und/oder Natriumpolysulfid enthaltenden Filtraten wird elementarer Schwefel erhalten. Dieser ist jedoch durch die Beimengung von Restfarbstoff so stark verunreinigt, dass er nicht mehr recyclisiert werden kann, d.h. nicht mehr für die Herstellung von Schwefelfarbstoffen geeignet ist; sondern einer Deponie zugeführt werden muss. Es ist auch bekannt („Chemiker-Zeitung/Chemische Apparatur/Verfahrenstechnik", 93. Jahrgang, 1969, Nr. 10, S. 393), Sulfide und Polysulfide aus Filtraten der Schwefelfarbstoffabrikation durch Zusatz von Schwermetallionen, insbesondere von Eisen- und Zinkionen in Form der Salze oder Hydroxide, als Schwermetallsulfide auszufällen. Auch hierbei entsteht neben der Sulfidfällung eine dem Polysulfidanteil entsprechende Menge freien Schwefels. Der in den Filtraten enthaltene Farbstoff wird bei dieser Methode ebenfalls in Form der Schwermetallfarbstoffsalze ausgefällt. Der so erhaltene Niederschlag ist ebenfalls für eine Recyclisierung unbrauchbar, da er einerseits grosse Mengen Schwermetalle enthält und andererseits ebenfalls den verunreinigenden Restfarbstoff. Dieser Verfahren ist besonders opportun dann, wenn im gleichen Betrieb grössere Mengen von Schwermetalle enthaltenden Abwässern anfallen. Der erhebliche Nachteil dieses Verfahrens besteht darin, dass auch hier der gesamte Schwefel, zusammen mit Restfarbstoff und Schwermetallsulfiden, deponiert werden muss.

Für die Aufarbeitung von thiosulfathaltigen Abwässern ist es bekannt („Chemiker-Zeitung/Chemische Apparatur/Verfahrenstechnik", 93. Jahrgang, 1969, Nr. 10, S. 394, 395), die Farbstoffreste durch Zusatz relativ geringer Mengen von Schwermetallsalzen, insbesondere Eisen- oder Zinksalzen, auszufällen, die Fällung abzufiltrieren und aus dem erhaltenen, praktisch farbstofffreien Filtrat den Schwefel durch Erhitzen mit Säuren zu gewinnen. Der so erhaltene Schwefel ist für eine Wiederverwendung bei der Herstellung von Schwefelfarbstoffen geeignet. Dieses Verfahren ist jedoch nicht geeignet, das Problem der sulfid- bzw. polysulfidhaltigen Filtrate und der daraus nach bisherigen Verfahren in grossen Mengen anfallenden, mit Farbstoff verunreinigten Schwefelrückstände zu überwinden.

Es wurde nun gefunden, dass man Schwefel aus gefärbten, Alkalisulfiden und/oder Alkalipolysulfiden enthaltenden Abwasserlösungen, insbesondere aus den stark gefärbten Filtraten der Schwefelfarbstoffabrikation, recyclisieren kann, indem man die Lösung mit einer zur Entfärbung eben ausreichenden Menge eines Schwermetallhydroxids oder Schwermetallsalzes bei einem pH im Bereich zwischen 9 und 14 versetzt, und den dabei entstehenden Niederschlag abtrennt und entweder aus dem entfärbten Filtrat den Schwefel in an sich bekannter Weise ausfällt und abtrennt oder das in dem entfärbten Filtrat enthaltene Alkalipolysulfid zur Herstellung von Schwefelfarbstoffen verwendet.

Zur Entfärbung der Lösungen kommen z.B. Hydroxide und Salze der Schwermetalle Chrom, Cobalt, Nickel, Mangan, insbesondere aber von Eisen und Zink, in Betracht. Als Salze werden vor allem lösliche Salze, insbesondere von anorganischen Säuren, verwendet. Vor allem werden die Chloride, Sulfate und Nitrate verwendet. Bei Schwermetallverbindungen in höheren Wertigkeitsstufen tritt zunächst eine Reduktion ein, wodurch eine der Menge der Schwermetallverbindung äquivalente Menge Sulfid oxidiert wird. Aus diesem Grund sind die Hydroxide und Salze der Schwermetalle in den üblichen niederen Oxidationsstufen bevorzugt, beim Eisen also das Eisen(II)hydroxid oder die Eisen(II)salze.

Die Schwermetallhydroxide können in Form von giessbaren Anschlämmungen, stichfesten Pasten oder in getrockneter Form den gefärbten Alkalisulfid bzw. Alkalipolysulfid enthaltenden Lösungen zugesetzt werden. Werden anstelle der Hydroxide Salze der Schwermetalle verwendet, so werden diese zweckmässigerweise in Form von Lösungen eingesetzt. Ein besonderer Vorteil des Verfahrens besteht hierbei darin, dass als Lösungen von Schwermetallsalzen auch schwermetallhaltige Abwässer aus anderen Produktionsbereichen eingesetzt werden können. Der Zusatz der Schwermetallverbindung erfolgt in der Regel unter Rühren. Man setzt das Rühren so lange fort und bemisst auch die Menge der einzusetzenden Schwermetallverbindung danach, dass bei einer Tüpfelprobe auf saugfähigem Filtrierpapier ein praktisch farbloser Auslauf erhalten wird.

Die Menge des für die Entfärbung der Lösung erforderlichen Schids oder Schwermetallsalzes richtet sich naturgemäss nach der Menge der in der Lösung vorhandenen, auszufällenden Farbstoffe. In der Regel sind pro Liter Lösung 0,003 bis 0,06 kg Schwermetallhydroxid oder eine äquivalente Menge Schwermetallsalz erforderlich.

Bei Lösungen bzw. Filtraten mit sehr kleinen oder sehr grossen Farbstoffgehalten kann eine Reduzierung oder Erhöhung der genannten Mengen an Schwermetallverbindungen erforderlich sein.

Die Temperatur, bei der der Zusatz der Schwermetallhydroxide und/oder Schwermetallsalze erfolgt und bei der die Farbstofffällung ausgeführt wird, ist von untergeordneter Bedeutung und kann im Prinzip zwischen 0°C und dem Siedepunkt des Filtrats, ca. 100°C, liegen. Zweckmässig arbeitet man im Bereich von 20 bis 80°C bei der Temperatur, mit der die Lösungen bzw. Schwefelfarbstoffiltrate anfallen. Der pH-Wert, bei dem die Ausfällung erfolgt, ist ebenfalls nicht kritisch, solange er im kräftig alkalischen Bereich bleibt, d.h. zwischen 9 und 14 liegt. Bevorzug arbeitet man im Bereich von pH 10 bis 12. Nach der vollständigen Ausfällung des Farbstoffs, die am praktisch farblosen Auslauf der Tüpfelprobe erkennbar ist, wird die Suspension vom Festkörper getrennt, zweckmässigerweise durch Filtrieren, Sedimentieren oder Zentrifugieren.

Der abfiltrierte Niederschlag ist mengenmässig gering und kann leicht deponiert werden. Das Filtrat ist klar und nur schwach gefärbt und kann nach einer der üblichen bekannten Methoden auf elementaren Schwefel aufgearbeitet werden. Beispielsweise kann dies durch Einleitung von Schwefeldioxid oder Zusatz von Thiosulfaten, z.B. Natriumthiosulfate, im sauren pH-Bereich erfolgen. Der saure pH-Bereich wird durch Zusatz von Säuren, insbesondere Schwefel- oder Salzsäure, eingestellt. In jedem Fall wird dabei ein fast farbstofffreier Schwefel erhalten, der in gut abtrennbarer Form anfällt, d.h. leicht filtriert oder zentrifugiert bzw. sedimentiert werden kann. Der erhaltene Schwefel kann in vielen Produktionsprozessen wiederverwendet werden, z.B. ist er zur Herstellung von Schwefelfarbstoffen geeignet. Die Reinheit des Schwefels ist hoch und beträgt normalerweise 96 bis 98%.

Die Filtrate, die nach der Abtrennung des durch den Zusatz der Schwermetallhydroxide und/oder Schwermetallsalze anfallenden Niederschlags erhalten werden, enthalten noch Alkalipolysulfide. Diese Alkalipolysulfide können auch bei der Herstellung von Schwefelfarbstoffen eingesetzt werden. Wenn bei dem erfindungsgemässen Verfahren stark gefärbte Filtrate bzw. Abwässer aus der Schwefelfarbstoffherstellung verarbeitet werden, so enthalten die nach der erfindungsgemässen Ausfällung des Farbstoffanteils mit Schwermetallhydroxiden oder Schwermetallsalzen anfallenden klaren, nur noch schwach gefärbten oder praktisch farblosen Filtrate in der Regel im Liter noch 100 bis 200 g Alkalipolysulfide. Diese Filtrate können nun wieder anstelle einer äquivalenten Menge Reinpolysulfid direkt zur Herstellung von Schwefelfarbstoffen nach dem Kochverfahren eingesetzt werden. In Fällen, in denen die genannte Konzentration des Polysulfids für die Durchführung der Schwefelungsreaktion ausreicht, kann die Lösung ohne weitere Behandlung eingesetzt werden. Für Zwecke, für die eine höher konzentrierte Alkalipolysulfidlösung erforderlich ist, wird die erhaltene Lösung zunächst aufgestärkt. Hierzu wird der Lösung pro Liter 0,5 bis 2 mol, vorzugsweise 1 bis 1,5 mol $Na_2S$ und 1,25 bis 7 mol, vorzugsweise 2,5 bis 5 mol Schwefel zugesetzt, und 1 bis 5 h bei 50 bis 100°C, vorzugsweise 80 bis 90°C, zweckmässigerweise unter Rühren gehalten.

Die Zufuhr des $Na_2S$ kann sowohl in fester Form als auch in Form der technisch vorliegenden, meist 20 bis 40%igen wässerigen Lösungen erfolgen. Werden $Na_2S$-Lösungen eingesetzt, so kann nach restloser Auflösung des Schwefels zur Erreichung der gewünschten Polysulfidkonzentration ein Teil des Wassers abdestilliert werden.

Selbstverständlich ist es auch möglich, die nach der Klärung der Filtrate anfallenden Polysulfidlösung durch Eindampfen auf die gewünschte höhere Konzentration zu bringen, jedoch ist in der Regel das oben beschriebene Aufstärken der Lösung ökonomischer.

Es war überraschend, dass durch Zusatz einer relativ geringen Menge der Schwermetallionen die ebenfalls geringen Farbstoffgehalte der gefärbten Lösungen quantitativ ausgefällt werden können, obwohl in den Lösungen neben den geringen Farbstoffgehalten ein erheblicher Überschuss an Sulfiden und Polysulfiden vorhanden ist.

Insbesondere bei der Herstellung von Schwefelfarbstoffen bietet das erfindungsgemässe Verfahren erhebliche technische Vorteile, da es einerseits den Bedarf an elementarem Schwefel merklich herabsetzt und andererseits die Deponierung von unbrauchbarem Schwefelrückstand überflüssig macht.

Das Verfahren ist somit nicht nur ökonomisch sehr wertvoll, sondern auch unter dem ökologischen Aspekt eine wesentliche Bereicherung der Technik. Die Möglichkeit, die entfärbten Filtrate direkt als Polysulfidlösungen bei der Herstellung von Schwefelfarbstoffen verwenden zu können, führt zu einer Reduzierung der Verfahrensschritte und damit zu einer zweiteren Kosteneinsparung.

*Beispiel 1*

a) 1 l eines Natriumsulfid neben Natriumpolysulfid enthaltenden Filtrats mit einem pH-Wert von 11-11,4 aus der Fabrikation von Cl-Vat Blue 43 wird bei 20 bis 25° C unter Rühren mit 50 ml einer 20 gew.%igen Lösung von Ferrosulfat versetzt. Während der Zugabe wird das Fortschreiten der Farbstoffausfällung durch Tüpfeln auf saugfähiges Filtrierpapier verfolgt. Der zunächst farbstarke Auslauf wird mit fortschreitender Farbstoffausfällung immer heller. Nach der Zugabe der Ferrosulfatlösung lässt man noch nachrühren, bis der Auslauf praktisch farblos ist (ca. 20-40 min) und saugt dann die erhaltene Suspension über ein alkalibeständiges Filtertuch ab.

Der Filterrückstand wird mit Kochsalzlösung von 6° Bé polysulfidfrei gewaschen, trockengesaugt und verworfen. Das gereinigte Filtrat hat eine schwache Olivfärbung und kann nach einer beliebigen bekannten Methode auf elementaren Schwefel verarbeitet werden.

Besonders vorteilhaft ist die Reaktion mit saurer Alkalithiosulfatlösung, die, wie folgt, ausgeführt werden kann:

b) Das gemäss Absatz a erhaltene Filtrat wird mit 5 l Wasser verdünnt. In einem 10-l-Rührgefäss werden 400 ml einer 150-170 g/l Natriumthiosulfat enthaltenden wässerigen Lösung (vorgereinigtes Filtrat aus der Herstellung von Cl-Sulfur Black 1) vorgelegt und durch Zusatz von etwas 20%iger technischer Schwefelsäure auf pH 2-3 eingestellt. Dann lässt man im Verlauf von 15-20 min das verdünnte Filtrat aus Absatz a unter Rühren bei 20-25° C in die saure Thiosulfatlösung einfliessen, wobei durch gleichzeitige Zugabe von 20%iger technischer Schwefelsäure (ca. 300 ml) dafür gesorgt wird, dass der pH-Wert der Mischung nicht über 2-3 ansteigt. Nach beendetem Zulauf lässt man ca. 10 min nachrühren und stellt den pH-Wert der Mischung durch Zusatz von 20%iger Natronlauge auf pH 7-7,5 ein.

Der ausgeschiedene Schwefel wird abgesaugt, mit Wasser salzfrei gewaschen und getrocknet.

Er hat eine hellgraue bis schwach olive Färbung, einen analytischen Gehalt von 96-98% Reinschwefel und ist zur Wiederverwendung bei der Herstellung von Schwefelfarbstoffen geeignet.

*Beispiel 2:*

1 l der nach Beispiel 1a erhaltenen, schwach olivgefärbten Filtratlösung wird mit 175 g einer 35 gew.%igen Lösung von Natriumhydrogensulfid, 80 g Natronlauge von 50° Bé und 96 g Schwefel im geschlossenen Dreihalskolben mit Rückflussaufsatz bei 80 bis 90° C gerührt, bis der Schwefel völlig gelöst ist. Anschliessend wird im Rotationsverdampfer bei 75 bis 80° C Badtemperatur und 80 mbar bis zur beginnenden Salzabscheidung konzentriert und bei 60 bis 70° C filtriert. Man erhält 450 ml Natriumtetrasulfidlösung der Dichte 1,450, die bei der Schwefelfarbstoffherstellung für die Durchführung wässeriger Kochschmelzen verwendbar ist. Beim Eindampfen dieser Lösung und Trocknen des Rückstands im Vakuumschrank bei 50 bis 70 mbar und 90° C bis zur Gewichtskonstanz können 345 g festes Natriumpolysulfid erhalten werden.

## Patentansprüche

1. Verfahren zur Recyclisierung von Schwefel aus gefärbten, Alkalisulfide und/oder Alkalipolysulfide enthaltenden Abwasserlösungen, dadurch gekennzeichnet, dass die Lösung mit einer zur Entfärbung ausreichenden Menge eines Schwermetallhydroxids oder eines Schwermetallsalzes bei einem pH im Bereich zwischen 9 und 14 versetzt, der entstandene Niederschlag abgetrennt und entweder aus dem enttfärbten Filtrat in an sich bekannter Weise Schwefel ausgefällt und abgetrennt oder das in dem entfärbten Filtrat enthaltene Alkalipolysulfid zur Herstellung von Schwefelfarbstoffen verwendet wird.

2. Verfahren nach Anspruch 1, dadurch gekennzeichnet, dass als gefärbte Alkalisulfid und/oder Alkalipolysulfide enthaltende Lösung ein Filtrat aus der Schwefelfarbstoffabrikation verwendet wird.

3. Verfahren nach einem der beiden Ansprüche 1 oder 2, dadurch gekennzeichnet, dass so viel Schwermetallhydroxid oder Schwermetallsalz zugefügt wird, bis bei einer Tüpfelprobe ein farbloser Auslauf erhalten wird.

4. Verfahren nach den Ansprüchen 1 bis 3, dadurch gekennzeichnet, dass pro-Liter-Lösung 0,003 bis 0,06 kg Schwermetallhydroxid und/oder eine äquivalente Menge Schwermetallsalz zugefügt wird.

5. Verfahren nach den Ansprüchen 1 bis 4, dadurch gekennzeichnet, dass als Schwermetallhydroxid Eisen- und/oder Zinkhydroxid und als Schwermetallsalze Eisen- und/oder Zinksalze zugesetzt werden.

6. Verfahren nach Anspruch 5, dadurch gekennzeichnet, dass Eisen(II)hydroxid und/oder Eisen(II)salze zugesetzt werden.

7. Verfahren nach den Ansprüchen 1 bis 6, dadurch gekennzeichnet, dass die Ausfällung des Niederschlags bei pH-Werten von 10 bis 12 erfolgt.

8. Verfahren nach den Ansprüchen 1 bis 7, dadurch gekennzeichnet, dass lösliche Schwermetallsalze zugesetzt werden.

9. Verfahren nach den Ansprüchen 1 bis 8, dadurch gekennzeichnet, dass als Schwermetallsalze Chloride, Sulfate oder Nitrate, insbesondere solche des Eisens oder Zinks, zugesetzt werden.

10. Verfahren nach den Ansprüchen 1 bis 9, dadurch gekennzeichnet, dass aus dem entfärbten Filtrat der Schwefel im sauren Medium durch Zusatz von Schwefeldioxid oder von Thiosulfat ausgefällt wird.

11. Verfahren nach den Ansprüchen 1 bis 9, dadurch gekennzeichnet, dass das entfärbte Filtrat direkt zur Herstellung von Schwefelfarbstoffen verwendet wird.

12. Verfahren nach Anspruch 11, dadurch gekennzeichnet, dass das entfärbte Filtrat zunächst durch Erwärmen mit Natriumsulfid und Schwefel aufgestärkt wird.

## Revendications

1. Procédé de recyclage du soufre provenant de solutions aqueuses résiduaires colorées, contenant des sulfures alcalins ou des polysulfures alcalins ou les deux, caractérisé en ce que, pour la décoloration, on ajoute une quantité suffisante d'un hydroxyde de métal lourd ou d'un sel de métal lourd à un pH compris entre 9 et 14, on sépare le précipité obtenu et l'on précipite et sépare, de façon connue, le soufre du filtrat décoloré ou l'on utilise le polysulfure alcalin, contenu dans le filtrat décoloré, pour produire des colorants au soufre.

2. Procédé selon la revendication 1, caractérisé en ce qu'on utilise, comme solution colorée contenant des sulfures alcalins ou des polysulfures alcalins ou les deux, un filtrat provenant de la fabrication des colorants au soufre.

3. Procédé selon l'une des revendications 1 ou 2, caractérisé en ce qu'on introduit de l'hydroxyde de métal lourd ou du sel de métal lourd jusqu'à obtention, à un essai à la touche, d'un écoulement incolore.

4. Procédé selon l'une quelconque des revendications 1 à 3, caractérisé en ce qu'on introduit, par litre de solution, 0,003 à 0,06 kg d'un hydroxyde de métal lourd ou une quantité équivalente d'un sel de métal lourd ou les deux.

5. Procédé selon l'une quelconque des revendications 1 à 4, caractérisé en ce que l'on ajoute, comme hydroxyde de métal lourd, de l'hydroxyde de fer ou de l'hydroxyde de zinc ou de l'hydroxyde de fer et de l'hydroxyde de zinc et, comme sels de métaux lourds, des sels de fer ou des sels de zinc ou les deux.

6. Procédé selon la revendication 5, caractérisé en ce que l'on ajoute de l'hydroxyde de fer-(II) ou des sels de fer-(II) ou les deux.

7. Procédé selon l'une quelconque des revendications 1 à 6, caractérisé en ce qu'on effectue la précipitation du précipité à une valeur de pH de 10 à 12.

8. Procédé selon l'une quelconque des revendications 1 à 7, caractérisé en ce qu'on ajoute des sels de métaux lourds solubles.

9. Procédé selon l'une quelconque des revendications 1 à 8, caractérisé en ce qu'on ajoute, comme sels de métaux lourds, des chlorures, sulfates ou nitrates, en particulier ceux du fer ou du zinc.

10. Procédé selon l'une quelconque des revendications 1 à 9, caractérisé en ce qu'on précipite le soufre du filtrat décoloré, en opérant en milieu acide par addition du dioxyde de soufre ou de thiosulfate.

11. Procédé selon l'une quelconque des revendications 1 à 9, caractérisé en ce qu'on utilise le filtrat décoloré directement pour la production de colorants au soufre.

12. Procédé selon la revendication 11, caractérisé en ce qu'on enrichit tout d'abord le filtrat décoloré, en le chauffant avec du sulfure de sodium et du soufre.

## Claims

1. Process for the recovery of sulphur from coloured effluent solutions containing alkali metal sulphides and/or alkali metal polysulphides, characterized in that a heavy metal hydroxide or a heavy metal salt is added, at a pH ranging between 9 and 14, to the solution in an amount sufficient for decolorization, the precipitate formed is separated and either sulphur is precipitated and separated from the decolorized filtrate in a manner known by itself or the alkali metal polysulfide contained in the decolorized filtrate is used for the production of sulphur dyestuffs.

2. The process according to claim 1, characterized in that the solution containing colored alkali metal sulphides and/or alkali metal polysulphides is a filtrate from the production of sulphur dyestuffs.

3. The process according to claim 1 or 2, characterized in that the heavy metal hydroxide or heavy metal salt is added in an amount such that in a spot test a colorless spread is obtained.

4. The process according to claims 1 to 3, characterized in that per litre of solution 0.003 to 0.06 kg of heavy metal hydroxide and/or an equivalent amount of heavy metal salt is added.

5. The process according to claims 1 to 4, characterized in that the heavy metal hydroxide added is iron hydroxide and/or zinc hydroxide and the heavy metal salts added are iron salts and/or zinc salts.

6. The process according to claims 5, characterized in that iron-(II) hydroxide and/or iron-(II) salts are added.

7. The process according to claims 1 to 6, characterized in that the precipitation of the precipitate takes place at pH values between 10 and 12.

8. The process according to claims 1 to 7, characterized in that soluble heavy metal salts are added.

9. The process according to claims 1 to 8, characterized in that the heavy metal salts added are chlorides, sulphates or nitrates, in particular of iron or zinc.

10. The process according to claims 1 to 9, characterized in that the sulphur is precipitated from the decolorized filtrate in an acid medium by adding sulphur dioxide or thiosulphate.

11. The process according to claims 1 to 9, characterized in that the decolorized filtrate is directly used for the production of sulphur dyestuffs.

12. The process according to claim 11, characterized in that the concentration of the decolorized filtrate is first increased by heating it with sodium sulphide and sulphur.